# EUROPEAN PATENT SPECIFICATION

(11) **EP 2 442 498 B1**
(45) Date of publication and mention of the grant of the patent: **31.05.2017**
(21) Application number: 10785740.1
(22) Date of filing: 07.06.2010
(51) Int. Cl.: H04L 12/761, H04L 12/801, H04L 12/833, H04L 12/835, H04L 12/931, H04L 12/933, H04L 12/935

(54) **METHOD AND DEVICE FOR CONTROLLING SWITCHING NETWORK TRAFFIC**
VERFAHREN UND VORRICHTUNG ZUR STEUERUNG EINES SCHALTNETZWERKVERKEHRS
PROCÉDÉ ET DISPOSITIF DE RÉGULATION DU TRAFIC D'UN RÉSEAU COMMUTÉ

(30) Priority: 12.06.2009 CN 200910147971
(43) Date of publication of application: 18.04.2012
(73) Proprietor: ZTE Corporation, Shenzhen, Guangdong 518057 (CN)
(72) Inventor: ZHAO, Peipei, Shenzhen Guangdong 518057 (CN)
(74) Representative: Wilson Gunn
(86) International application number: PCT/CN2010/073637
(87) International publication number: WO 2010/142227

(56) References cited:
- EP-A2- 1 052 816
- CN-A- 1 499 793
- CN-A- 1 909 508
- CN-A- 101 253 729
- US-A1- 2004 032 827
- US-A1- 2006 092 836
- US-A1- 2008 212 472
- RAMAKRISHNAN AT&T LABS RESEARCH SALLY FLOYD LBNL K K: "A Proposal to add Explicit Congestion Notification (ECN) to IP; draft-kksjf-ecn-02.txt", 19980901, no. 2, 1 September 1998 (1998-09-01), XP015030962, ISSN: 0000-0004

## Description

### TECHNICAL FIELD

The present disclosure relates to the field of data switching technology, particularly to a method and device for controlling switching network traffic.

### BACKGROUND

The switching network is the core part of a bandwidth switching device such as a switch/router. Typically, traffic control technology is adopted in controlling the traffic of the switching network in order to solve the congestion of switching network traffic and to avoid the problem of on-chip output cache overflow resulting from the congestion of the switching network. Currently, there are the following two basic ideas of traffic control mechanisms:
(1) If congested, the switching network will transmit a control cell through its output port, informing the switched access chip to reduce cell transmission to the switching network so as to alleviate the congestion.
(2) To obtain information about the state and exit traffic of each transmitting port of the switching network through an off-chip line card of the switching network and to determine the bandwidth allocated to the transmitting port of the line card according to the information about the state and exit traffic. In other words, the congestion of the switching network may be alleviated by improving the reasonableness of bandwidth allocation.

However, the foregoing traffic control mechanisms have the following problems:
Since in the traffic control mechanism described in method (1), informing the congestion state of the source switched access line card relies on outputting a control cell from the switching network, the switching network must have the ability to position the source line card that results in the congestion. An existing solution is to re-queue N Virtual Output Queues (VOQs) of an N*N switching network based on different cell input port, namely N Virtual Input Queues (VIQs) will be created for each output VOQ and there would have been N*N VIQs eventually. As a result, the switching network has to analyze a control cell should be transmitted to which line cards through determination of the length of the VIQs, when congested. In this method, a great many linked lists are required to realize the N*N VIQs, thereby consuming huge amount of resources.

At present, most commercial switching networks support both unicast and multicast communication modes. With regard to a multicast cell, the switching network needs to copy the multicast cell in-chip, thus the multicast input bandwidth is smaller than the multicast output bandwidth. The basic idea of method (2) is to simply match the input bandwidth of the switching network with the output bandwidth. Due to the randomness of the changes in the traffic intensity of the switching network, the unicast/multicast ratio in the input bandwidth of the switching network is changing dynamically. Therefore, it is very difficult to accurately calculate a dynamically matched input traffic only according to the exit traffic and congestion state of the switching network. Another problem in the existing method is that it fails to separate the unicast traffic control mechanism from the multicast traffic control mechanism, resulting in that the traffic control over one type of cells may affect the performance of another type of cells. If method (2) is adopted as a means of traffic control, a phenomenon of unreliable and inaccurate traffic control response may appear when solving the problem of the mixed unicast/multicast congestion. In fact, this traffic control mechanism is more suitable for handling the switching network congestion in one-to-one (i.e. unicast) communication mode.

Further, the traffic control methods in the prior art do not involve any link level traffic control mechanism and accordingly fail to solve the problem of unicast/multicast in-chip cache overflow resulting from the congestion. However, the cache overflow may lead to a cell loss and create difficulty for packet reassemble. Therefore, in a traffic control mechanism, considering how to solve the problem of cache overflow is very essential.

Apparently, the existing traffic control methods are unreasonable in solving the problem of congestion in unicast/multicast communication modes and cannot guarantee reliability of the traffic control response and accuracy of the traffic control. Furthermore, the counter-pressure speed of the existing traffic control methods is low, which can carry an inevitable risk of cache overflow caused by congestion.

The features of the preamble of the independent claims are known from the following documents:
US 2006/092836 A1 (KWAN BRUCE H [US] ET AL) 4 MAY 2006 (2006-05-04) discloses an intelligent congestion feedback apparatus and method therefore a source endpoint transmitting data packets, and a destination endpoint receiving the data packets, and a timer in the destination endpoint set to zero. An intermediate node detects congestion between the source endpoint and the destination endpoint. Upon congestion detection, the intermediate node marks the data packets transmitted to the destination endpoint indicative of congestion. Upon receipt of the marked data packets, the timer being reverse counting from a present time value to zero and a feedback loop is turned-on between the destination endpoint and the source endpoint to transmit congestion notification (CN) messages to the source endpoint contributing to the congestion.

EP 1052816 A2 (NORTEL NETWORKS LTD [CA]) 15 November 2000 (2000-11-15) discloses a method and apparatus provided for scheduling multicast data in an input-queued network device. According to one aspect of the present invention, the head-of-line blocking problem is avoided for multicast queues. A fabric arbiter receives a transmit request associated with multiple input ports. The transmit request identifies those of the output ports to which pending multicast cells are ready to be transmitted, if any. The fabric arbiter receives a backpressure signal from a backpressuring output port. Then, based upon the backpressure signal the fabric arbiter schedules multicast cells from transmission across the fabric. If the size of a multicast queue exceeds a predetermined threshold, then the fabric arbiter ignores the backpressure signal and causes the head-of-line multicast cell from the multiple queue to be transferred to the back-pressuring output port. Otherwise, the fabric arbiter prevents multicast cells from being transferred to the backpressuring output port by masking requests destined for the backpressuring output port thereby removing the backpressuring output port from consideration during multicast scheduling.

RAMAKRISHNAN AT&T LABS RESEARCH SALLY FLOYD LBNL K K: "A Proposal to add Explicit Congestion Notification (ECN) to IP; draft-kksjf-ecn-02.tx", 19980901, no. 2, 1 September 1998 (19980-09-01), XP015030962, ISSN: 0000-0004, discloses a proposed addition of ECN (Explicit Congestion Notification) to IP.

US 2008/212472 A1 (MUSACHIO JOHN T [US] ET AL) 4 September 2008 (2008-09-04) discloses a packet switching fabric that contains a separate queue scheduler for each combination of an input module and a fabric output port. Each scheduler may also be specific to a single class of service. Each queue scheduler schedules its packet without regard to state of other input queues and without regard to packets destined for other output ports. In an aspect, the fabric manages per-flow bandwidth utilization of output port bandwidth capacity by monitoring the same and asserting backpressure toward the queue scheduler for any threat that is exceeding its bandwidth allocation. In another aspect, a switching fabric uses leaky buckets to apply backpressure in response to overutilization of downstream port capacity by particular subflows. In another aspect, a switching fabric includes a cascade backpressure scheme.

### SUMMARY

The present disclosure provides a method and device for controlling switching network traffic, which intend to solve the problem that the existing traffic control methods are unreasonable in solving the problem of congestion in unicast /multicast communication modes and cannot guarantee reliability of the traffic control response and accuracy of the traffic control, and to solve the problem that there is an inevitable risk of cache overflow caused by congestion since the counter-pressure speed is low.

The present disclosure provides a method for controlling switching network traffic, which comprises:
step 1: monitoring a length of a unicast virtual output queue and a length of a multicast virtual output queue in real time, and when the length of one of the queues exceeds a congestion threshold, recording the queue as a congestion queue, generating a congestion indication signal and adding a congestion identifier to a header of every cell of a corresponding output port;
step 2: transmitting a notification message of cell entering/leaving queue when it is found from the real-time monitoring that there is a cell entering/leaving the congestion queue;and
step 3: determining whether a number of cells entering the congestion queue reaches a pre-determined threshold according to the notification message of cell entering/leaving queue, and if it does, adding an indication signal of active link level traffic control to the header of every cell output by the corresponding output port.

Specifically, the method may further comprise: before execution of step 1, receiving a unicast cell and a multicast cell, queuing them and storing them in an output cache; and
step 3 may further comprise: determining whether the output cache overflows, and if it does, adding the indication signal of active link level traffic control to a header of every cell output by every output port.

Further, the method provided by the present disclosure may further comprise:
adding an indication signal of inactive link level traffic control to the header of every cell output by the corresponding output port if it is determined that the number of the cells entering the congestion queue does not reach the pre-determined threshold; and
adding the indication signal of inactive link level traffic control to the header of every cell output by every output port if it is determined that the output cache does not overflow.

Each input port may be arranged with a cell congestion counter; and
the notification message of cell entering/leaving queue may comprise: an indication message of incrementing the cell congestion counter of the corresponding input port by one when it is found there is a cell entering the queue, and an indication message of decrementing the cell congestion counter of the corresponding input port by one when it is found there is a cell leaving the queue.

Step 3 may specifically comprise:
incrementing or decrementing the cell congestion counter of the corresponding input port by one according to the notification message of cell entering/leaving queue; determining whether the cell congestion counter exceeds a pre-determined threshold, and learning that the number of the cells entering the congestion queue exceeds its threshold when it is determined that the cell congestion counter exceeds its pre-determined threshold, and adding the indication signal of active link level traffic control to the header of every cell output by the corresponding output port.

The present disclosure further provides a device for controlling switching network traffic comprising an output cache module and a queue management module, the device further comprises: a congestion-monitoring module and a counter-pressure module; wherein
the congestion-monitoring module is arranged for monitoring a length of every virtual output queue in the queue management module in real time, and when the length of one of the queues exceeds a congestion threshold, recording the queue as a congestion queue, and transmitting a congestion indication signal to the counter-pressure module to start real-time monitoring, and when it is found there is a cell entering/leaving the congestion queue, transmitting a notification message of cell entering/leaving queue to the counter-pressure module; wherein the virtual output queue comprises: a unicast virtual output queue and a multicast virtual output queue; and
the counter-pressure module is arranged for adding a congestion identifier to a header of every cell of a corresponding output port when the congestion indication signal is received; when the notification message of cell entering/leaving queue is received, determining whether a number of cells entering the congestion queue reaches a pre-determined threshold according to the notification message of cell entering/leaving queue, and if it does, adding an indication signal of active link level traffic control to the header of every cell output by the corresponding output port.

Specifically, the device provided by the present disclosure may further comprise:
a cell receiving module, arranged for receiving a unicast cell and a multicast cell, queuing them and storing them in an output cache module; wherein
the counter-pressure module may be further arranged for adding the indication signal of active link level traffic control to a header of every cell output by every output port if it is determined that the output cache in the output cache module overflows.

Further, the counter-pressure module may be further arranged for adding an indication signal of inactive link level traffic control to the header of every cell output by the corresponding output port if it is determined that the number of the cells entering the congestion queue does not reach the pre-determined threshold; and adding the indication signal of inactive link level traffic control to the header of every cell output by every output port if it is determined that the output cache does not overflow.

The counter-pressure module may be further arranged for maintaining a corresponding cell congestion counter for each input port; and
the notification message of cell entering/leaving queue may comprise: an indication message of incrementing the cell congestion counter of the corresponding input port by one when a cell is found entering the queue, and an indication message of decrementing the cell congestion counter of the corresponding input port by one when it is found there is a cell leaving the queue.

The counter-pressure module may further comprise: a receiving submodule for the congestion indication message, a receiving submodule for the notification message of cell entering/leaving queue and a counter monitoring submodule;
the receiving submodule for the congestion indication message is arranged for receiving the congestion indication signal transmitted by the congestion-monitoring module, and adding the congestion identifier to the header of every cell of the corresponding output port;
the receiving submodule for the notification message of cell entering/leaving queue is arranged for receiving the notification message of cell entering/leaving queue transmitted by the congestion-monitoring module, and incrementing or decrementing the cell congestion counter of the corresponding input port by one according to the notification message of cell entering/leaving queue; and
the counter monitoring submodule is arranged for determining whether the cell congestion counter exceeds a pre-determined threshold, and learning that the number of the cells entering the congestion queue exceeds its threshold when it is determined that the cell congestion counter exceeds its pre-determined threshold, and adding the indication signal of active link level traffic control to the header of every cell output by the corresponding output port.

Compared with the prior art, the present disclosure has the following advantages:
The method and device provided by the present disclosure can monitor the congestion condition of the current link, and add a congestion indication signal or a link level traffic control signal to the header of the cell according to the degree of congestion when link congestion is found from the monitoring, so that the destination line card can perform traffic control or stop the unicast /multicast operation according to the content of the header of the cell. Therefore, the device and method provided by the present disclosure can solve the problems in both the unicast congestion and multicast congestion. Moreover, since congestion indication signals and link level traffic control signals of the switching network are all transferred in band, namely, they are all loaded to a data cell (unicast /multicast) and then carried to a line card, they do not occupy the output bandwidth of the switching network, thereby raising bandwidth utilization of the switching network. Meanwhile, through the link level traffic control, the counter-pressure speed is raised and the problem of in-chip output cache overflow is effectively avoided. The present disclosure adopts the means of independent unicast /multicast traffic control to improve the reliability and accuracy of the traffic control.

### BRIEF DESCRIPTION OF THE DRAWINGS

Fig. 1 is a flow chart of a method for controlling switching network traffic according to an embodiment of the present disclosure;
Fig. 2 is a structural chart of a device for controlling the switching network traffic according to the present disclosure;
Fig. 3 is a block diagram of a switching system based on shared memory architecture according to an embodiment of the present disclosure;
Fig. 4 is a structural chart of the device for controlling the switching network traffic according to an embodiment of the present disclosure;
Fig. 5 is a schematic for generating a slow congestion indication signal according to an embodiment of the present disclosure; and
Fig. 6 shows unicast /multicast cell format according to an embodiment of the present disclosure.

### DETAILED DESCRIPTION

Below the technical scheme in the embodiments of the present disclosure will be described in a more evident and complete manner by referring to the accompanying drawings in the embodiments of the present disclosure. Apparently, the described embodiments are only a part of, other than all of the embodiments of the present disclosure. All other embodiments obtained by those of ordinary skill in the art based on the embodiments described in the present disclosure and without creative labor are all within the protection scope of the present disclosure.

The present disclosure provides a method and device for controlling switching network traffic, which intend to solve the problem that the existing traffic control method is unreasonable in solving the problem of congestion in unicast /multicast communication modes and cannot guarantee reliability of the traffic control response and accuracy of the traffic control, and to solve the problem that there is an inevitable risk of cache overflow caused the congestion since the counter-pressure speed is low.

In order to overcome the shortcomings in the prior art, the method and device provided by the present disclosure for the switching network supporting unicast/multicast communication modes, solve the problem in dynamic matching between input bandwidth and output bandwidth of the two kinds of cells, provide link level traffic control, avoid in-chip cache overflow of the switching network, prevent a unicast traffic control response from affecting multicast performance and guarantee unicast/multicast performance. All in all, the present disclosure provides a method and device for controlling switching network traffic, which are characterized by the reliable traffic control response, accurate traffic control and high counter-pressure speed.

Specifically, the design conception of a method for controlling switching network traffic provided by the present disclosure is: the method monitors the length of a unicast Virtual Output Queue (VOQ) and a multicast VOQ in real time, and when the length of one of the two queues exceeds a congestion threshold, generates a congestion indication signal and adds a congestion identifier to a header of every cell of a corresponding output port; meanwhile, starts to monitor in real time whether there is any cell entering/leaving the congestion queue, and if it does, generates a notification message of cell entering/leaving queue for later use to determine whether the number of cells entering the congestion queue reaches a pre-determined threshold, and if the number of cells entering the congestion queue exceeds the pre-determined threshold, adds an indication signal of active link level traffic control to the header of every cell output by the corresponding output port, and if it does not exceed the pre-determined threshold, adds an indication signal of inactive link level traffic control to the header of every cell output by the corresponding output port.

Further, the method provided by the present disclosure also comprises monitoring in real time whether a output cache of the switching network overflows, wherein if it does, adding the indication signal of active link level traffic control to the header of every cell output by every output port, and if it does not, adding the indication signal of inactive link level traffic control to the header of every cell output by every output port.

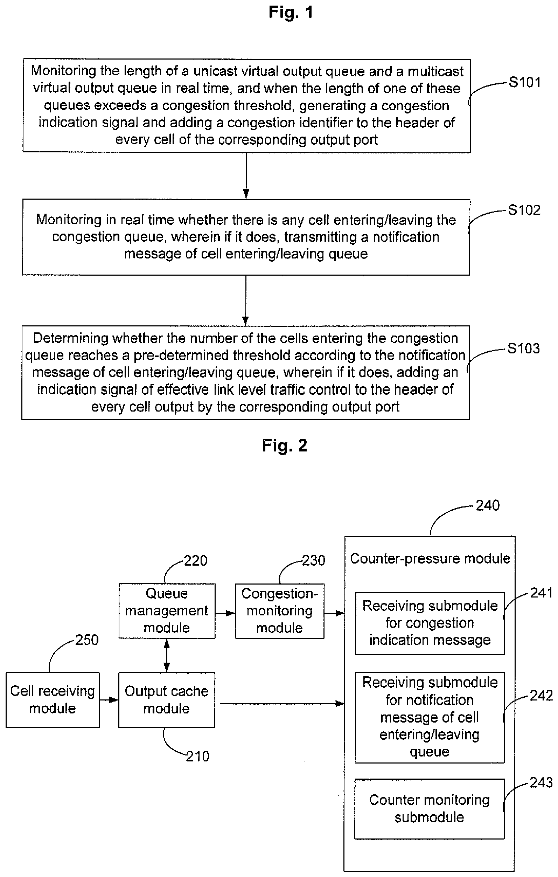

Below the concrete realization process of the method for controlling the switching network traffic provided by the present disclosure is described in details through an embodiment. As shown in Fig. 1, the following steps are included,
Step S101: monitoring the length of a unicast VOQ and a multicast VOQ in real time, and when the length of one of the two queues exceeds a congestion threshold, generating a congestion indication signal and adding a congestion identifier to the header of every cell of a corresponding output port; wherein the congestion threshold is pre-determined by the switching network system, and includes a Unicast Route Congestion (URC) threshold and an Multicast Route Congestion (MRC) threshold.

It should be noted that before execution of this step, the method further comprises: receiving unicast cells and multicast cells, and after unicast or multicast cells are received, queuing the cells according to their respective output ports to form the VOQ. That is, all the cells with the same output port will enter the same queue. Of course, this queuing process may be realized in the prior art and is not a key point of the present disclosure, and is described here in order to ensure the integrity of the scheme. Moreover, this cell receiving and queuing operation will last after the switching network is started, and this continuous receiving and queuing process may move on synchronously with this step. In one word, there is no limitation on the sequence relationship between them.

Concrete realization process of this step is: when a unicast VOQ is found exceeding the threshold, generating a unicast congestion indication and adding a unicast congestion identifier to the header of every cell of the corresponding output port; and when a multicast VOQ is found exceeding the threshold, generating a multicast congestion indication and adding a multicast congestion identifier to the header of every cell output by every output port.

Step S102: monitoring in real time whether there is any cell entering/leaving the congestion queue, wherein if it does, transmitting a notification message of cell entering/leaving queue.

It should be noted that the switching network system maintains a corresponding cell congestion counter for each input port. The cell congestion counter is used to count the number of cells entering/leaving a congested VOQ, and the cell congestion counter comprise a unicast cell congestion counter and a multicast cell congestion counter.

Wherein, the notification message of cell entering/leaving queue may comprise: an indication message of incrementing the cell congestion counter of the corresponding input port by one when it is found there is a cell entering the queue, and an indication message of decrementing the cell congestion counter of the corresponding input port by one when it is found there is a cell leaving the queue.

Based on the foregoing description, the concrete realization of this step is:
monitoring in real time whether there is any unicast cell entering the congested unicast VOQ, wherein if it does, monitoring its input port number and transmitting an indication message of incrementing the unicast cell congestion counter corresponding to the input port number by one;
monitoring in real time whether there is any multicast cell entering the congested multicast VOQ, wherein if it does, monitoring its input port number and transmitting an indication message of incrementing the multicast cell congestion counter corresponding to the input port number by one;
monitoring in real time whether there is any unicast cell scheduled and output from the congested unicast VOQ, wherein if it does, monitoring the input port number of the output cell and transmitting an indication message of decrementing the unicast cell congestion counter corresponding to the input port number by one; and
monitoring in real time whether there is any multicast cell scheduled and output from the congested multicast VOQ, wherein if it does, monitoring the input port number of the output cell and transmitting an indication message of decrementing the multicast cell congestion counter corresponding to the input port number by one.

Step S103: determining whether the number of the cells entering the congestion queue reaches a pre-determined threshold according to the notification message of cell entering/leaving queue, wherein if it does, adding an indication signal of active link level traffic control to the header of every cell output by the corresponding output port.

This step specifically comprises: incrementing the unicast cell congestion counter corresponding to the input port number by one when the received notification message is the indication message of incrementing the unicast cell congestion counter by one; incrementing the multicast cell congestion counter corresponding to the input port number by one when the received notification message is the indication message of incrementing the multicast cell congestion counter by one; decrementing the unicast cell congestion counter corresponding to the input port number by one when the received notification message is the indication message of decrementing the unicast cell congestion counter by one; decrementing the multicast cell congestion counter corresponding to the input port number by one when the received notification message is the indication message of decrementing the multicast cell congestion counter by one.

Meanwhile, determining whether the cell congestion counter corresponding to the input port exceeds the pre-determined threshold, wherein if it does, adding the indication signal of active link level traffic control to the header of every cell output by the corresponding output port, and wherein if it does not, adding an indication signal of inactive link level traffic control to the header of every cell output by the corresponding output port.

Further, while performing the foregoing congestion monitoring, the following operations may be further conducted in the embodiment of the present disclosure:
determining whether the unicast or multicast output cache overflows, wherein if it does, adding the indication signal of active link level traffic control to the header of every cell output by every output port, and wherein if it does not, adding the indication signal of inactive link level traffic control to the header of every cell output by every output port.

The method provided by the present disclosure monitors the congestion condition of the current link, and adds a congestion indication signal or a link level traffic control signal to the header of the cell according to the degree of congestion when link congestion is found from the monitoring, so that the destination line card can perform traffic control or stop unicast /multicast operation according to the content of the header of the cell. Therefore, the device and method provided by the present disclosure can simultaneously solve the problem of unicast congestion and multicast congestion. Moreover, as congestion indication signals and link level traffic control signals of the switching network are all transferred in band, namely, they are all loaded to a data cell (unicast /multicast) and then carried to a line card, they do not occupy the output bandwidth of the switching network, thereby raising bandwidth utilization of the switching network. Meanwhile, through the link level traffic control, the counter-pressure speed is raised and the problem of in-chip output cache overflow is effectively avoided. In summary, the present disclosure adopts the means of independent unicast /multicast traffic control to improve the reliability and accuracy of the traffic control.

It should be noted that an most preferred embodiment of "adding an indication signal of inactive link level traffic control" in the present disclosure is: adding the indication signal of inactive link level traffic control to the header of every cell output by the corresponding output port if it is determined that the number of cells entering the congestion queue does not exceed the pre-determined threshold and the output cache does not overflow.

The present disclosure also provides a device for controlling switching network traffic. As shown in Fig. 2, the device comprises an output cache module 210, a queue management module 220, a congestion-monitoring module 230 and a counter-pressure module 240; wherein
the congestion-monitoring module 230 is arranged for monitoring the length of every VOQ in the queue management module 220 in real time, and when the length of a queue exceeds a congestion threshold, transmitting a congestion indication signal to the counter-pressure module 240 and starting to monitor in real time whether there is any cell entering/leaving the congestion queue, wherein if it does, transmitting a notification message of cell entering/leaving queue to the counter-pressure module 240; and
the counter-pressure module 240 is arranged for adding a congestion identifier to the header of every cell of the corresponding output port when the congestion indication signal is received; when a notification message of cell entering/leaving queue is received, judging whether the number of the cells entering the congestion queue reaches a pre-determined threshold according to the received notification message of cell entering/leaving queue, and if it does, adding an indication signal of active link level traffic control to the header of every cell output by the corresponding output port.

The counter-pressure module 240 is further used to maintain a corresponding cell congestion counter for each input port.

The notification message of cell entering/leaving queue include: the indication message of incrementing the cell congestion counter of the corresponding input port by one when a cell is found entering the queue, and the indication message of decrementing the cell congestion counter of the corresponding input port by one when a cell is found leaving the queue.

The counter-pressure module 240 specifically comprises:
a receiving submodule for the congestion indication message 241, for receiving the congestion indication signal transmitted by the congestion-monitoring module 230, and adding a congestion identifier to the header of every cell of the corresponding output port.
a receiving submodule for the notification message of cell entering/leaving queue 242, for receiving the notification message of cell entering/leaving queue transmitted by the congestion-monitoring module 230, and incrementing or decrementing the cell congestion counter of the corresponding input port by one depending on the notification message of cell entering/leaving queue.
a counter monitoring submodule 243, for determining whether the cell congestion counter exceeds a pre-determined threshold, wherein if it does, determining that the number of the cells entering the congestion queue exceeds the pre-determined threshold, adding an indication signal of active link level traffic control to the header of every cell output by the corresponding output port.

The device provided by the present disclosure further comprises:
a cell receiving module 250, for receiving unicast cells and multicast cells, queuing them and storing them in the output cache module 210

The counter-pressure module 240 is further for determining whether the output cache in the output cache module 210 overflows, wherein if it does, adding an indication signal of active link level traffic control to the header of every cell output by every output port.

The counter-pressure module 240 is further for adding an indication signal of inactive link level traffic control to the header of every cell output by the corresponding output port if it is determined that the number of the cells entering the congestion queue does not reach the pre-determined threshold, and for adding an indication signal of inactive link level traffic control to the header of every cell output by every output port when the output cache does not overflow.

Below a preferred embodiment is used to describe in details the structural chart of the device for controlling switching network traffic provided by the present disclosure as well as the concrete process for its realization of the switching network traffic control.

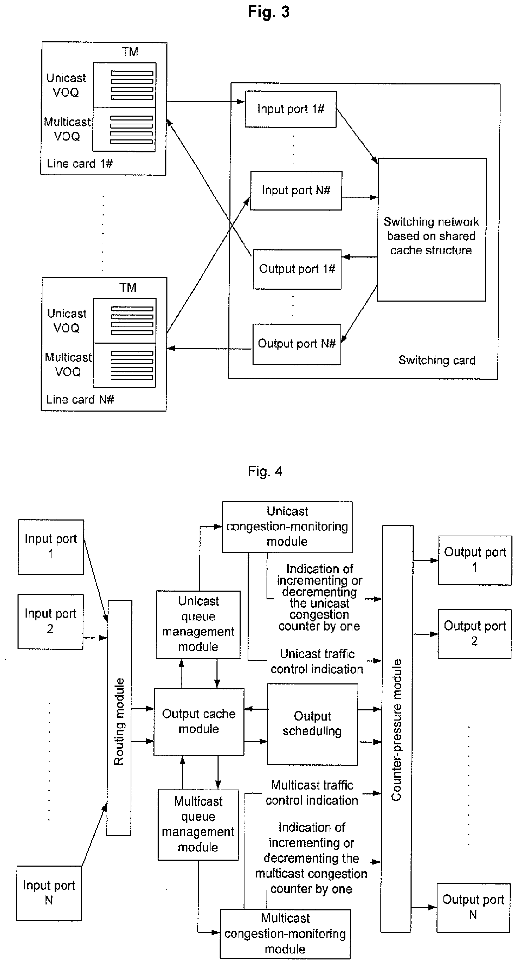

For clarity and for easy understanding, the present disclosure is described below on the basis of an N*N switching system based on a shared cache (i.e. shared memory) architecture. Fig. 3 shows the block diagram of the structure of this system. The basic principle in this system is that the source line card cuts the received unicast packet/multicast packet into unicast/multicast cells of a specified size, maintains a unicast VOQ and a multicast VOQ for each output port, and schedules and outputs the two VOQ cells to the switching card (also called the "switching network"). The switching card switches the received cells, schedules them and outputs them to the destination line card. Wherein, input terminal 1 and output terminal 1 of the line card should be connected to a same line card. It should be noted that the present disclosure is not limited to the particular architecture adopted by the switching system. In fact, the present disclosure may be used in any one of the following structures: time division structure (such as a shared cache/shared bus structure), space division switching structure (such as a crossbar structure) or hybrid structure, with a requirement that the unicast switching processing plane should be separated from the multicast switching processing plane. In Fig. 3, the switching network based on the shared cache structure may be expressed as "shared memory switch"; TM is an acronym for "traffic manager"; input port may be expressed as "input_port"; and output port may be expressed as "output_port."

Fig. 4 is a structural chart of a device for controlling the switching network traffic provided by an embodiment of the present disclosure. The device specifically comprises: N input ports, a routing module, an output cache module, a counter-pressure module, a unicast queue management module, a unicast congestion-monitoring module, a multicast queue management module, a multicast congestion-monitoring module and N output ports, wherein the unicast congestion-monitoring module and the multicast congestion-monitoring module is equivalent in functionality to the congestion-monitoring module 230; the routing module is equivalent in functionality to the cell receiving module 250; the unicast queue management module and the multicast queue management module is equivalent in functionality to the queue management module 220.

Specifically, the output cache module consists of two cache zones with configurable capacity, for storing unicast cells and multicast cells respectively; the unicast queue management module and the multicast queue management module maintain for the N output ports the N unicast VOQs and the N multicast VOQs, respectively, wherein the cells in each VOQ come from the N input ports; the counter-pressure module maintains a unicast link congestion counter u_link_count_n and a multicast link congestion counter m_link_count_n for each input port of the switching network, wherein n=1, 2, 3......N.

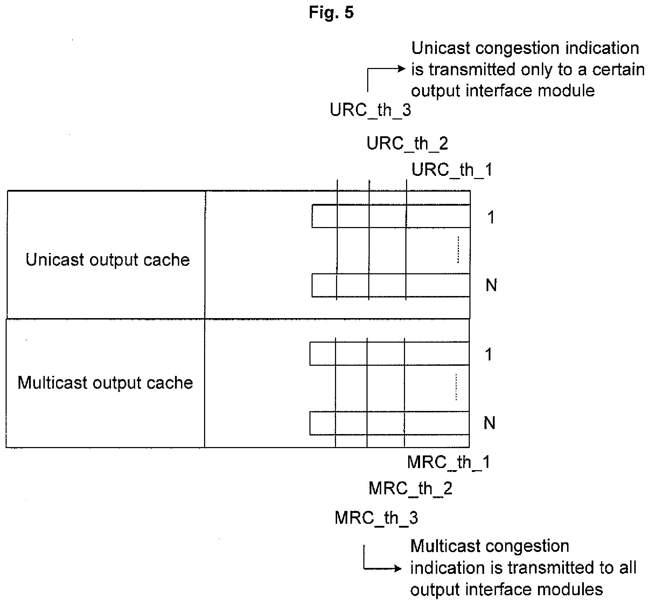

Before traffic control starts, a central processor of the switching network performs the following operations.
(1) Three Unicast Route Congestion (URC) thresholds are configured for the unicast VOQ, and URC_th_1, URC_th_2 and URC_th_3 are used to express three unicast routing of different congestion degree; specifically, when the length of unicast VOQ is greater than the URC threshold "URC_th_1," but smaller than the URC threshold "URC_th_2," it means a mild unicast congestion, which is expressed as UCI=01; when the length of unicast VOQ is greater than the URC threshold "URC_th_2," but smaller than the URC threshold "URC_th_3," it means a moderate unicast congestion, which is expressed as UCI=10; when the length of unicast VOQ is greater than the URC threshold "URC_th_3," it means a serious unicast congestion, which is expressed as UCI=11; no unicast congestion is expressed as UCI=00.
(2) Three Multicast Route Congestion (MRC) thresholds are configured for the multicast VOQ, and MRC_th_1, MRC_th_2 and MRC_th_3 are used to express three multicast routing of different congestion degree; specifically, when the length of the multicast VOQ is greater than the MRC threshold "MRC_th_1," but smaller than the MRC threshold "MRC_th_2," it means a mild multicast congestion, which is expressed as MCI=01; when the length of the multicast VOQ is greater than the MRC threshold "MRC_th_2," but smaller than the MRC threshold "MRC_th_3," it means a moderate multicast congestion, which is expressed as MCI=10; when the length of multicast VOQ is greater than the MRC threshold "MRC_th_3," it means a serious multicast congestion, which is expressed as MCI=11; no multicast congestion is expressed as MCI=00. Fig. 5 is a schematic for generating a slow congestion indication signal;
   Of course, the foregoing classification of the congestion degree may be modified according to the actual need and is not merely limited to the above classification.
(3) A unicast quick counter-pressure threshold "u_link_count_th" is configured for the unicast link congestion counter; a multicast quick counter-pressure threshold "m_link_count_th" is configured for the multicast link congestion counter; a unicast cache overflow threshold is configured for the unicast output cache, and a multicast cache overflow threshold is configured for the multicast output cache.

The unicast congestion-monitoring module monitors the length of every unicast VOQ in real time. Supposing that the length of a unicast VOQ of an output port m# has exceeded the three pre-configured Unicast Route Congestion (URC) thresholds; then the module would generate a corresponding Unicast Congestion Indication(UCI) and transfer it to the counter-pressure module, and the counter-pressure module would write the UCI to the header of every cell output from output port m# output link, including the multicast cells.

The multicast congestion-monitoring module monitors the length of every multicast VOQ in real time. If the length of any multicast VOQ has exceeded the three pre-configured Multicast Route Congestion (MRC) thresholds, the module would generate a corresponding Multicast Congestion Indication (MCI) and transfer it to the counter-pressure module; and the counter-pressure module would write the MCI to the header of every cell output from every output link of the switching network, including the unicast cells.

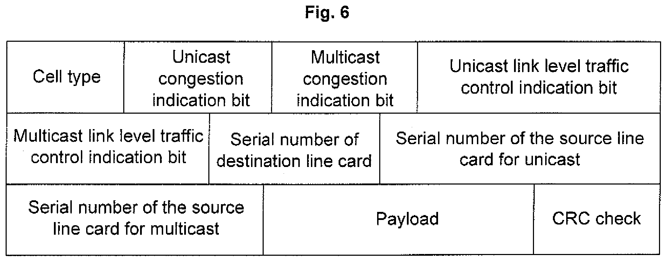

Specifically, when the unicast congestion-monitoring module finds that unicast congestion occurs in an output port #j, the unicast congestion-monitoring module would generate a UCI based on the fact that the length of the unicast VOQ of #j exceeds the URC threshold, and transfer the UCI to the counter-pressure module. The counter-pressure module would immediately write the UCI identifier to every cell (including the multicast cells) output from the output port #j. The concrete cell format is shown in Fig. 6, in which the header of each of the unicast and multicast cells carries a unicast and multicast congestion indication and a unicast and multicast link level traffic control indication. Meanwhile, the unicast congestion-monitoring module monitors the currently congested link in real time. If another cell enters the unicast VOQ to which the output port #j corresponds, then the serial number #i of the input port of the cell entering the queue would be obtained and an indication signal of incrementing the unicast link congestion counter "u_link_count_i" of the input port #i by one would be transmitted to the counter-pressure module. Having received the indication signal of incrementing the unicast link congestion counter u_link_count_i by one, the counter-pressure module would increment the u_link_count_i by one; if there is a cell leaving the unicast VOQ of #j, the serial number #q of the input port of the cell leaving the queue would be obtained, and an indication signal of decrementing the unicast link congestion counter u_link_count_q of #q by one would be transmitted to the counter-pressure module. Having receiving the indication signal of decrementing the unicast link congestion counter u_link_count_q by one, the counter-pressure module would decrement the u_link_count_q by one. In Fig. 6, the cell type may be expressed as Type; the unicast congestion indication bit may be expressed as UCI; the multicast congestion indication bit may be expressed as MCI; the unicast link level control indication bit may be expressed as ULCI; the multicast link level control indication bit may be expressed as MLCI; the serial number of the destination line card may be expressed as DST_ID; the serial number of the source card for unicast may be expressed as U_SRC_ID; the serial number of the source line card for multicast may be expressed as M_SRC_ID; the pay load may be expressed as payload; the checksum of the Cyclic Redundancy Check (CRC) may be expressed as CRC. When Type=00, it means it is a unicast data cell; when Type=11, it means it is a multicast data cell; when Type=01/10, it means it is a reserved field.

When the multicast congestion-monitoring module finds there is a multicast congestion occurs in an output port #k, the multicast congestion-monitoring module would generate an MCI based on the fact that the length of the multicast VOQ of #k exceeds the MRC threshold, and transfer the MCI to the counter-pressure module. The counter-pressure module would immediately write the MCI to the header of every cell (including the unicast cell) output from every output port. Meanwhile, the multicast congestion-monitoring module monitors the currently congested link in real time. If another cell enters the multicast VOQ of #k, then the serial number of the input port #h of the cell entering the queue would be obtained and an indication signal of incrementing the multicast link congestion counter m_link_count_h of #h by one would be transmitted to the counter-pressure module and the counter-pressure module would increment the m_link_count_h by one. If another cell leaves the multicast VOQ of #k, the multicast congestion-monitoring module would transmit an indication signal of decrementing the multicast link congestion counter m_link_count_p of #q by one to the counter-pressure module according to the serial number #p of the input port of the cell leaving the queue and the counter-pressure module would decrement the m_link_count_p by one.

It should be noted that the foregoing #j, #i, #q, #k, #h are just examples of input and output ports enumerated for better understanding of the solution of the present disclosure; the input ports and output ports are not limited thereto.

The counter-pressure module also monitors N "unicast link congestion counters" and N "multicast link congestion counters" in real time. When any one of the counters exceeds the pre-determined threshold, the corresponding link level traffic control would be triggered. For example, "1" means there is link level traffic control occurring, and "0" means there is not any link level traffic control occurring. Supposing that the u_link_count_i has exceeded the threshold, but the m_link_count_i has not exceeded the threshold, then the counter-pressure module would write 1 to the Unicast Link Control Indication (ULCI) bit of the head of the cell output from the output link i#, and write 0 to the Multicast Link Control Indication (MLCI) bit, which means "unicast link level traffic control is active and multicast link level traffic control is inactive." Since it is required there is a connection correspondence between the switching card and the line card, the arrival of the cell carrying the link level traffic control indication at line card i# will cause the unicast from line card i# to the switching network to stop, without affecting the multicast. Likewise, when u_link_count_i does not exceed the threshold, but m_link_count_i exceeds the threshold, the counter-pressure module will write 0 to the ULCI bit and 1 to the MLCI bit of the header of every cell output by every output port, which means "unicast link level traffic control is inactive and multicast link level traffic control is active." Since it is required there is a connection correspondence between the switching card and the line card, the arrival of the cell carrying the link level traffic control indication at line card i# will cause the multicast from line card i# to the switching network to stop, without affecting the unicast. In other circumstances, the above operations are performed similarly.

In order to reliably avoid overflow of the output cache, the counter-pressure module of the device provided by the present disclosure is also responsible for monitoring the occupancy of a "unicast output cache" and a "multicast output cache." When the unicast or multicast output cache overflows, a link level traffic control indication will be generated in a proper way and added to the header of the output cell. For example, when the unicast output cache exceeds the pre-determined threshold, but the multicast output cache does not exceed the pre-determined threshold, the counter-pressure module will write 1 to the ULCI bit and 0 to the MLCI bit of the header of every cell output by every output link, which means "unicast link level traffic control is active and multicast link level traffic control is inactive." Since it is required there is a connection correspondence between the switching card and the line card, the arrival of the cell carrying the link level traffic control indication at the corresponding destination line card will cause the unicast from the corresponding destination line card to the switching network to stop, without affecting the multicast. In other circumstance, it can be done in the same manner.

The destination line card, which receives the cells carrying the UCI, would map the three types of unicast congestion identifier to three types of tokens with different number. The destination line card injects the obtained tokens into a unicast token bucket. The unicast token bucket controls the output speed of the tokens. Each output token represents authorizations of a certain number of unicast cells. The destination line card sends the unicast authorizations to the corresponding source link cards through "authorization control cells". Each source line card adjusts unicast cell output according to the received unicast authorizations, thereby achieving the goal of matching the unicast input bandwidth with the unicast output bandwidth of the switching network; when the destination line card carrying the MCI cells is received, the three types of multicast congestion identifier are corresponded to three types of tokens in different quantity. The line card injects the obtained tokens into a multicast token bucket. The multicast token bucket controls output speed of the tokens. Each output token represents authorizations of a certain number of multicast cells. The line card outputs a corresponding amount of multicast traffic to the switching network according to multicast cell authorizations, thereby achieving the goal of matching the multicast input bandwidth with the multicast output bandwidth of the switching network.

If the destination line card reads to get wise to that the unicast link level traffic control is active, the scheduling and output of the unicast cells at the connecting port of the destination line card and the switching network (referring to the switching network outputting "the identifier cell of active unicast link level traffic control") will be shut, but the scheduling and output of the unicast cells at the port will not be affected; the destination line card handles the operation of multicast congestion identifiers and multicast link level traffic control in a similar way as adopted above for unicast, which can refer to the process for unicast traffic control.

The device provided by the embodiments of the present disclosure monitors the congestion condition of the current link, and adds a congestion indication signal or a link level traffic control signal to the header of the cell according to the degree of congestion when link congestion is found from the monitoring, so that the destination line card can perform traffic control or stop the unicast /multicast operation according to the content of the header of the cell. Therefore, the device and method provided by the present disclosure can solve the problems in both the unicast congestion and multicast congestion. Moreover, since congestion indication signals and link level traffic control signals of the switching network are all transferred in band, namely, they are all loaded to a data cell (unicast /multicast) and then carried to a line card, they do not occupy the output bandwidth of the switching network, thereby raising bandwidth utilization of the switching network. Meanwhile, through the link level traffic control, the counter-pressure speed is raised and the problem of in-chip output cache overflow is effectively avoided. The present disclosure adopts the means of independent unicast /multicast traffic control to improve the reliability and accuracy of the traffic control.

As will be apparent, those skilled in the art may make various modifications and variations to the present disclosure without departing from the scope of the present disclosure. If such modifications and variations to the present disclosure are within the scope of the claims of the present disclosure and the scope of its equivalent art, the present disclosure will also intend to contain these modifications and variations.

## Claims

1. A method for controlling switching network traffic in a switching card including a plurality of input ports and a plurality of output ports, the switching card receiving unicast and multicast cells from a plurality of line cards via the plurality of input ports, scheduling the received unicast and multicast cells and sending the scheduled unicast and multicast cells to the plurality of line cards via the plurality of output ports, **characterized in that** the method comprises:
step 1: monitoring, by a congestion-monitoring module (230), both a length of a unicast virtual output queue and a length of a multicast virtual output queue of the unicast and multicast cells received from the plurality of line cards via the plurality input ports, in real time, and when the length of one of the queues exceeds a congestion threshold, recording the queue as a congestion queue, generating a congestion indication signal and sending it to a counter-pressure module (240); and adding, by the counter-pressure module (240), a congestion identifier to a header of every cell to be outputted via a corresponding output port to a corresponding line card, so as to notify the corresponding line card to control its traffic to be sent to the switching card;
step 2: transmitting, by the congestion-monitoring module (230), a notification message of cell entering/leaving queue to the counter-pressure module (240), when it is found from the real-time monitoring that there is a cell received via one of the plurality of input ports entering/leaving the congestion queue; and
step 3: determining, by the counter-pressure module (240), whether a number of cells in the congestion queue that are received via the input port reaches a pre-determined threshold according to the notification message of cell entering/leaving queue, and if it does, adding, by the counter-pressure module (240), an indication signal of active link level traffic control to the header of every cell to be outputted via the corresponding output port to the corresponding line card, so as to notify the corresponding line card to stop its corresponding traffic to be sent to the switching card;
wherein the counter-pressure module (240) maintains a unicast cell congestion counter and a multicast cell congestion counter for each input port; and
the notification message of cell entering/leaving queue comprises: an indication message of incrementing the unicast cell congestion counter of the corresponding input port by one when it is found that there is a unicast cell entering the queue; an indication message of decrementing the unicast cell congestion counter of the corresponding input port by one when it is found that there is a unicast cell leaving the queue; an indication message of incrementing the multicast cell congestion counter of the corresponding input port by one when it is found that there is a multicast cell entering the queue; and an indication message of decrementing the multicast cell congestion counter of the corresponding input port by one when it is found that there is a multicast cell leaving the queue.

2. The method according to claim 1, wherein the method further comprises: before execution of step 1, receiving, by a cell receiving module (250), a unicast cell and a multicast cell, queuing them and storing them in an output cache module (210); and
step 3 further comprises: determining, by the counter-pressure module (240), whether the output cache in the output cache module (210) overflows, and if it does, adding the indication signal of active link level traffic control to a header of every cell to be outputted via every one of the plurality of output ports to the plurality line cards, so as to notify the plurality line cards to stop their corresponding traffic to be sent to the switching card.

3. The method according to claim 2, further comprising:
adding, by the counter-pressure module (240), an indication signal of inactive link level traffic control to the header of every cell to be outputted via the corresponding output port to the corresponding line card, if it is determined that the number of the cells in the congestion queue that are received via the input port does not reach the pre-determined threshold; and
adding, by the counter-pressure module (240), the indication signal of inactive link level traffic control to the header of every cell to be outputted via every one of the plurality of output ports to the plurality line cards, if it is determined that the output cache does not overflow.

4. The method according to claim 1, wherein step 3 comprises:
incrementing or decrementing, by the counter-pressure module (240), the cell congestion counter of the input port by one according to the notification message of cell entering/leaving queue;
determining, by the counter-pressure module (240), whether the cell congestion counter of the input port exceeds a pre-determined threshold, learning, by the counter-pressure module (240), that the number of the cells in the congestion queue that are received via the input port exceeds its threshold when it is determined that the cell congestion counter of the input port exceeds its pre-determined threshold; and
adding, by the counter-pressure module (240), the indication signal of active link level traffic control to the header of every cell to be outputted via the corresponding output port to the corresponding line card.

5. A device for controlling switching network traffic in a switching card including a plurality of input ports and a plurality of output ports, the switching card receiving unicast and multicast cells from a plurality of line cards via the plurality of input ports, scheduling the received unicast and multicast cells and sending the scheduled unicast and multicast cells to the plurality of line card via the plurality of output ports , **characterized in that** the device comprises a congestion-monitoring module (230) and a counter-pressure module (240), wherein
the congestion-monitoring module (230) is arranged for monitoring both a length of a unicast virtual output queue and a length of a multicast virtual output queue of the unicast and multicast cells received from the plurality of line cards via the plurality input ports, in real time, and when the length of one of the queues exceeds a congestion threshold, recording the queue as a congestion queue, generating a congestion indication signal and sending it to the counter-pressure module (240);
the counter-pressure module (240) is arranged for adding a congestion identifier to a header of every cell to be outputted via a corresponding output port to a corresponding line card, so as to notify the corresponding line card to control its traffic to be sent to the switching card;
the congestion-monitoring module (230) is further arranged for transmitting a notification message of cell entering/leaving queue to the counter-pressure module (240) when it is found from the real-time monitoring that there is a cell received via one of the plurality of input ports entering/leaving the congestion queue; and
the counter-pressure module (240) is further arranged for determining whether a number of cells in the congestion queue that are received via the input port reaches a pre-determined threshold according to the notification message of cell entering/leaving queue, and if it does, adding an indication signal of active link level traffic control to the header of every cell to be outputted via the corresponding output port to the corresponding line card, so as to notify the corresponding line card to stop its corresponding traffic to be sent to the switching card;
wherein the counter-pressure module (240) is further arranged for maintaining a unicast cell congestion counter and a multicast cell congestion counter for each input port; and
the notification message of cell entering/leaving queue comprises: an indication message of incrementing the unicast cell congestion counter of the corresponding input port by one when it is found that there is a unicast cell entering the queue; an indication message of decrementing the unicast cell congestion counter of the corresponding input port by one when it is found that there is a unicast cell leaving the queue; an indication message of incrementing the multicast cell congestion counter of the corresponding input port by one when it is found that there is a multicast cell entering the queue; and an indication message of decrementing the multicast cell congestion counter of the corresponding input port by one when it is found that there is a multicast cell leaving the queue.

6. The device according to claim 5, further comprising a cell receiving module (250), arranged for receiving a unicast cell and a multicast cell, queuing them and storing them in an output cache module (210); wherein
the counter-pressure module (240) is further arranged for determining whether the output cache in the output cache module (210) overflows, and if it does, adding the indication signal of active link level traffic control to a header of every cell to be outputted from every one of the plurality of output ports to the plurality line cards, so as to notify the plurality line cards to stop their corresponding traffic to be sent to the switching card.

7. The device according to claim 6, wherein the counter-pressure module (240) is further arranged for adding an indication signal of inactive link level traffic control to the header of every cell to be outputted via the corresponding output port to the corresponding line card, if it is determined that the number of the cells in the congestion queue that are received via the input port does not reach the pre-determined threshold; and
adding the indication signal of inactive link level traffic control to the header of every cell to be outputted via every one of the plurality of output ports to the plurality of line cards, if it is determined that the output cache does not overflow.

8. The device according to claim 5, wherein the counter-pressure module (240) further comprises: a receiving submodule for the congestion indication message (241), a receiving submodule for the notification message of cell entering/leaving queue (242) and a counter monitoring submodule (243);
the receiving submodule for the congestion indication message (241) is arranged for receiving the congestion indication signal transmitted by the congestion-monitoring module (230), and adding the congestion identifier to the header of every cell to be outputted via the corresponding output port to the corresponding line card;
the receiving submodule for the notification message of cell entering/leaving queue (242) is arranged for receiving the notification message of cell entering/leaving queue transmitted by the congestion-monitoring module (230), and incrementing or decrementing the cell congestion counter of the input port by one according to the notification message of cell entering/leaving queue; and
the counter monitoring submodule (243) is arranged for determining whether the cell congestion counter of the input port exceeds a pre-determined threshold, learning that the number of the cells in the congestion queue that are received via the input port exceeds its threshold when it is determined that the cell congestion counter of the input port exceeds its pre-determined threshold, and adding the indication signal of active link level traffic control to the header of every cell to be outputted via the corresponding output port to the corresponding line card.

## Patentansprüche

1. Verfahren zur Steuerung eines Schaltnetzwerkverkehrs in einer Schaltkarte mit einer Vielzahl von Eingangsanschlüssen und einer Vielzahl von Ausgangsanschlüssen, wobei die Schaltkarte Unicast- und Multicast-Zellen aus einer Vielzahl von Leitungskarten über die Vielzahl von Eingangsanschlüssen empfängt, die empfangenen Unicast und Multicast-Zellen festlegt und die festgelegten Unicast- und Multicast-Zellen an die Vielzahl von Leitungskarten über die Vielzahl von Ausgangsanschlüssen sendet, **dadurch gekennzeichnet, dass** das Verfahren umfasst:
Schritt 1: Überwachung durch ein Datenstauüberwachungsmodul (230) in Echtzeit einer Länge einer Unicast-virtuellen Ausgangswarteschlange und einer Länge einer Multicast-virtuellen Ausgangswarteschlange der Unicast- und Multicast-Zellen, die von der Mehrzahl von Leitungskarten über die Mehrzahl an Eingangsanschlüssen empfangen werden und, wenn die Länge einer der Warteschlangen eine Überlastungsschwelle überschreitet, Aufzeichnen der Warteschlange als Überlastungswarteschlange, Erzeugen eines Überlastungsanzeigesignals und Senden desselben an ein Gegendruckmodul (240); und Hinzufügung einer Überlastungskennung durch das Gegendruckmodul (240) zu einem Header jeder Zelle, die über einen entsprechenden Ausgangsanschluss an eine entsprechende Leitungskarte ausgegeben werden soll, um so die entsprechende Leitungskarte zu benachrichtigen, ihren Datenverkehr zu regulieren, der an die Schaltkarte gesendet werden soll;
Schritt 2: Übertragung einer Mitteilung der Eingangs-/ Ausgangswarteschlange der Zelle durch das Datenstauüberwachungsmodul (230) in die Warteschlange zum Gegendruckmodul (240), wenn bei der Echtzeitüberwachung festgestellt wird, dass eine Zelle, empfangen über einen der Vielzahl von Eingangsanschlüssen, die Überlastungswarteschlange betritt/ verlässt; und
Schritt 3: Bestimmung durch das Gegendruckmodul (240), ob eine Anzahl von Zellen in der Überlastungswarteschlange, die über den Eingangsanschluss empfangen werden, einen vorbestimmten Schwellenwert gemäß der Mitteilung der Eingangs-/ Ausgangswarteschlange der Zelle erreicht, und wenn dies der Fall ist, Hinzufügung eines Anzeigesignals der aktiven Verkehrssteuerung der Link-Ebene an den Header jeder Zelle durch das Gegendruckmodul (240), das über den entsprechenden Ausgangsanschluss an die entsprechende Leitungskarte ausgegeben werden soll, um die entsprechende Leitungskarte zu benachrichtigen, den entsprechenden Datenverkehr zu stoppen, der an die Schaltkarte gesendet werden soll;
wobei das Gegendruckmodul (240) einen Unicast-Zellen-Überlastungszähler und einen Multicast-Zellen-Überlastungszähler für jeden Eingangsanschluss unterhält; und
die Mitteilung der Eingangs-/ Ausgangswarteschlange der Zelle dabei aufweist: eine Benachrichtigung zur Erhöhung des Unicast-Zellen-Überlastungszählers des entsprechenden Eingangsanschlusses um eins, wenn festgestellt wird, dass eine Unicast-Zelle in die Warteschlange eintritt; eine Benachrichtigung zur Erniedrigung des Unicast-Zellen-Überlastungszählers des entsprechenden Eingangsanschlusses um eins, wenn festgestellt wird, dass eine Unicast-Zelle die Warteschlange verlässt; eine Benachrichtigung zur Erhöhung des Multicast-Zellen-Überlastungszählers des entsprechenden Eingangsanschlusses um eins, wenn festgestellt wird, dass eine Multicast-Zelle in die Warteschlange eintritt; und eine Benachrichtigung zur Erniedrigung des Multicast-Zellen-Überlastungszählers des entsprechenden Eingangsanschlusses um eins, wenn festgestellt wird, dass eine Multicast-Zelle die Warteschlange verlässt.

2. Verfahren nach Anspruch 1, wobei die Methode weiter aufweist: Empfangen einer Unicast-Zelle und einer Multicast-Zelle vor der Ausführung von Schritt 1 durch ein Zellenempfangsmodul (250), Speicherung und Erstellung einer Warteschlange in einem Ausgabe-Cache-Modul (210); und
Schritt 3 ferner umfasst: Bestimmung durch das Gegendruckmodul (240), ob der Ausgabe-Cache im Ausgabe-Cache-Modul (210) überläuft, und, wenn dies der Fall ist, Hinzufügung eines Anzeigesignals der aktiven Verkehrssteuerung der Link-Ebene an einen Header jeder Zelle, das über jeden der Vielzahl an Ausgangsanschlüssen an die Vielzahl an Leitungskarten ausgegeben werden soll, um die Vielzahl an Leitungskarten zu benachrichtigen, ihren entsprechenden Datenverkehr zu stoppen, der an die Schaltkarte gesendet werden soll.

3. Verfahren nach Anspruch 2, weiter aufweisend:
Hinzufügung eines Anzeigesignals der inaktiven Verkehrssteuerung der Link-Ebene an den Header jeder Zelle durch das Gegendruckmodul (240), das über den entsprechenden Ausgangsanschluss an die entsprechende Leitungskarte ausgegeben werden soll, wenn festgestellt wird, dass die Anzahl der Zellen in der Überlastungswarteschlange, die über den Eingangsanschluss empfangen werden, nicht den vorgegebenen Schwellenwert erreicht; und
Hinzufügung des Anzeigesignals der inaktiven Verkehrssteuerung der Link-Ebene an den Header jeder Zelle durch das Gegendruckmodul (240), das über jeden der Vielzahl an Ausgangsanschlüssen an die Vielzahl an Leitungskarten ausgegeben werden soll, wenn festgestellt wird, dass der Ausgabe-Cache nicht überläuft.

4. Verfahren nach Anspruch 1, wobei Schritt 3 aufweist:
Erhöhung oder Erniedrigung des Zellen-Überlastungszählers durch das Gegendruckmodul (240) des Eingangsanschlusses um eins, gemäß der Mitteilung der Eingangs-/ Ausgangswarteschlange der Zelle;
Bestimmung durch das Gegendruckmodul (240), ob der Zellenüberlastungszähler des Eingangsanschlusses eine vorab festgelegte Überlastungsschwelle überschreitet, Lernen des Gegendruckmoduls (240), dass die Anzahl der Zellen in der Überlastungswarteschlange, die über den Eingangsanschluss empfangen werden, seine Schwelle überschreitet, wenn festgestellt wird, dass der Zellenüberlastungszähler des Eingangsanschlusses seinen vorbestimmten Schwellenwert überschreitet; und
Hinzufügung des Anzeigesignals der aktiven Verkehrssteuerung der Link-Ebene an den Header jeder Zelle durch das Gegendruckmodul (240), das über den entsprechenden Ausgangsanschluss an die entsprechende Leitungskarte ausgegeben werden soll.

5. Vorrichtung zur Steuerung eines Schaltnetzwerkverkehrs in einer Schaltkarte mit einer Vielzahl von Eingangsanschlüssen und einer Vielzahl von Ausgangsanschlüssen, wobei die Schaltkarte Unicast- und Multicastzellen aus einer Vielzahl von Leitungskarten über die Vielzahl von Eingangsanschlüssen empfängt, die empfangenen Unicast und Multicast-Zellen festlegt und die festgelegten Unicast- und Multicast-Zellen an die Vielzahl von Leitungskarten über die Vielzahl von Ausgangsanschlüssen sendet, **dadurch gekennzeichnet, dass** die Vorrichtung ein Datenstauüberwachungsmodul (230) und ein Gegendruckmodul (240) umfasst, wobei:
das Datenstauüberwachungsmodul (230) angeordnet ist zur Überwachung in Echtzeit einer Länge einer Unicast-virtuellen Ausgangswarteschlange und einer Länge einer Multicast-virtuellen Ausgangswarteschlange der Unicast- und Multicast-Zellen, die von der Mehrzahl von Leitungskarten über die Mehrzahl an Eingangsanschlüssen empfangen werden, und, wenn die Länge einer der Warteschlangen eine Überlastungsschwelle überschreitet, zur Aufzeichnung der Warteschlange als Überlastungswarteschlange, und zur Erzeugung eines Überlastungsanzeigesignals, welches an das Gegendruckmodul (240) gesendet wird;
das Gegendruckmodul (240) angeordnet ist zur Hinzufügung einer Überlastungskennung zu einem Header jeder Zelle, die über einen entsprechenden Ausgangsanschluss an eine entsprechende Leitungskarte ausgegeben werden soll, um so die entsprechende Leitungskarte zu benachrichtigen, ihren Datenverkehr zu regulieren, der an die Schaltkarte gesendet werden soll;
das Datenstauüberwachungsmodul (230) weiter angeordnet ist zur Übertragung einer Mitteilung der Eingangs-/ Ausgangswarteschlange der Zelle an das Gegendruckmodul (240), wenn bei der Echtzeitüberwachung festgestellt ist, dass eine Zelle, empfangen über einen der Vielzahl von Eingangsanschlüssen, die Überlastungswarteschlange betritt/ verlässt; und
das Gegendruckmodul (240) weiter angeordnet ist zur Bestimmung, ob eine Anzahl von Zellen in der Überlastungswarteschlange, die über den Eingangsanschluss empfangen werden, einen vorbestimmten Schwellenwert gemäß der Mitteilung der Eingangs-/ Ausgangswarteschlange der Zelle erreicht, und, wenn dies der Fall ist, zur Hinzufügung eines Anzeigesignals der aktiven Verkehrssteuerung der Link-Ebene an einen Header jeder Zelle, das über den entsprechenden Ausgangsanschluss an die entsprechende Leitungskarte ausgegeben werden soll, um die entsprechende Leitungskarten zu benachrichtigen, ihren entsprechenden Datenverkehr zu stoppen, der an die Schaltkarte gesendet werden soll,
wobei das Gegendruckmodul (240) weiter angeordnet ist zur Unterhaltung eines Unicast-Zellen-Überlastungszählers und eines Multicast-Zellen-Überlastungszählers für jeden Eingangsanschluss; und
die Mitteilung der Eingangs-/ Ausgangswarteschlange der Zelle dabei aufweist: eine Benachrichtigung von der Erhöhung des Unicast-Zellen-Überlastungszählers des entsprechenden Eingangsanschlusses um eins, wenn festgestellt wird, dass eine Unicast-Zelle in die Warteschlange eintritt; eine Benachrichtigung von der Erniedrigung des Unicast-Zellen-Überlastungszählers des entsprechenden Eingangsanschlusses um eins, wenn festgestellt wird, dass eine Unicast-Zelle die Warteschlange verlässt; eine Benachrichtigung von der Erhöhung des Multicast-Zellen-Überlastungszählers des entsprechenden Eingangsanschlusses um eins, wenn festgestellt wird, dass eine Multicast-Zelle in die Warteschlange eintritt; und eine Benachrichtigung von der Erniedrigung des Multicast-Zellen-Überlastungszählers des entsprechenden Eingangsanschlusses um eins, wenn festgestellt wird, dass eine Multicast-Zelle die Warteschlange verlässt.

6. Vorrichtung nach Anspruch 5, weiter aufweisend ein Zellenempfangsmodul (250) zum Empfangen einer Unicast-Zelle und einer Multicast-Zelle, deren Speicherung und Erstellung einer Warteschlange für die Zellen in einem Ausgabe-Cache-Modul (210); wobei
das Gegendruckmodul (240) weiter angeordnet ist zur Bestimmung, ob der Ausgabe-Cache im Ausgabe-Cache-Modul (210) überläuft, und, wenn dies der Fall ist, Hinzufügung eines Anzeigesignals der aktiven Verkehrssteuerung der Link-Ebene an den Header jeder Zelle, das über jeden der Vielzahl an Ausgangsanschlüssen an die Vielzahl an Leitungskarten ausgegeben werden soll, um die Vielzahl an Leitungskarten zu benachrichtigen, ihren entsprechenden Datenverkehr zu stoppen, der an die Schaltkarte gesendet werden soll.

7. Vorrichtung nach Anspruch 6, wobei das Gegendruckmodul (240) weiter angeordnet ist zur Hinzufügung eines Anzeigesignals der inaktiven Verkehrssteuerung der Link-Ebene an den Header jeder Zelle, das über den entsprechenden Ausgangsanschluss an die entsprechende Leitungskarte ausgegeben werden soll, wenn festgestellt wird, dass die Anzahl der Zellen in der Überlastungswarteschlange, die über den Eingangsanschluss empfangen werden, nicht den vorgegebenen Schwellenwert erreichen; und
zur Hinzufügung des Anzeigesignals der inaktiven Verkehrssteuerung der Link-Ebene an den Header jeder Zelle, das über jeden der Vielzahl an Ausgangsanschlüssen an die Vielzahl an Leitungskarten ausgegeben werden soll, wenn festgestellt wird, dass der Ausgabe-Cache nicht überläuft.

8. Vorrichtung nach Anspruch 5, wobei das Gegendruckmodul (240) weiter aufweist: ein empfangendes Submodul für die Überlastungsanzeigenachricht (241), ein empfangendes Submodul für die Mitteilung der Eingangs-/ Ausgangswarteschlange der Zelle (242), und ein Submodul zur Zählerüberwachung (243);
das empfangende Submodul für die Überlastungsanzeigemeldung (241) zum Empfangen des durch das Datenstauüberwachungsmodul (230) gesendeten Überlastungsanzeigesignals angeordnet ist und zum Hinzufügen der Überlastungskennung zum Header jeder Zelle, die über den entsprechenden Ausgangsanschluss an die entsprechende Leitungskarte ausgegeben werden soll;
das empfangende Submodul für die Mitteilung der Eingangs-/ Ausgangswarteschlange der Zelle (242) angeordnet ist zum Empfang der Mitteilung der Eingangs-/ Ausgangswarteschlange der Zelle durch das Datenstauüberwachungsmodul (230) und zur Erhöhung oder zur Erniedrigung des Zelleüberlastungszählers des Eingangsanschlusses um eins gemäß der Mitteilung der Eingangs-/ Ausgangswarteschlange der Zelle; und
das Submodul zur Zählerüberwachung (243) angeordnet ist zur Bestimmung, ob der Zellenüberlastungszähler des Eingangsanschlusses einen vorbestimmten Schwellenwert überschreitet, und zum Lernen, dass die Anzahl der Zellen in der Überlastungswarteschlange, die über den Eingangsanschluss empfangen wird, seinen Schwellenwert überschreitet, wenn bestimmt ist, dass der Zellenüberlastungszähler des Eingangsanschlusses seinen vorbestimmten Schwellenwert überschreitet und zur Hinzufügung des Anzeigesignals der aktiven Verkehrssteuerung der Link-Ebene an den Header jeder Zelle, das über den entsprechenden Ausgangsanschluss an die entsprechende Leitungskarte ausgegeben werden soll.

## Revendications

1. Procédé pour réguler un trafic de réseau de commutation dans une carte de commutation incluant une pluralité de ports d'entrée et une pluralité de ports de sortie, la carte de commutation recevant des cellules en monodiffusion et en multidiffusion provenant d'une pluralité de cartes de ligne via la pluralité de ports d'entrée, organiser les cellules en monodiffusion et en multidiffusion reçues et envoyer les cellules en monodiffusion et en multidiffusion organisées à la pluralité de cartes de ligne via la pluralité de ports de sortie, **caractérisé en ce que** le procédé comprend :
étape 1 : surveiller, par un module de surveillance de congestion (230), à la fois une longueur d'une file d'attente de sortie virtuelle en monodiffusion et une longueur d'une file d'attente de sortie virtuelle en multidiffusion des cellules en monodiffusion et en multidiffusion reçues de la pluralité de cartes de ligne via la pluralité de ports d'entrée, en temps réel, et lorsque la longueur de l'une des files d'attente dépasse un seuil de congestion, enregistrer la file d'attente comme une file d'attente de congestion, générer un signal d'indication de congestion et l'envoyer à un module de contre-pression (240) ; et ajouter, par le module de contre-pression (240), un identifiant de congestion à un en-tête de chaque cellule à transmettre via un port de sortie correspondant à une carte de ligne correspondante, de manière à notifier à la carte de ligne correspondante de réguler son trafic à envoyer à la carte de commutation ;
étape 2 : transmettre, par le module de surveillance de congestion (230), un message de notification de cellule entrant dans/sortant de la file d'attente au module de contre-pression (240), lorsqu'il est trouvé à partir de la surveillance en temps réel qu'il y a une cellule reçue via l'un de la pluralité de ports d'entrée entrant dans/sortant de la file d'attente de congestion ; et
étape 3 : déterminer, par le module de contre-pression (240), si un nombre de cellules dans la file d'attente de congestion qui sont reçues via le port d'entrée atteint un seuil prédéterminé en fonction du message de notification de cellule entrant dans/sortant de la file d'attente, et si tel est le cas, ajouter, par le module de contre-pression (240), un signal d'indication de régulation de trafic de niveau de liaison active à l'en-tête de chaque cellule à transmettre via le port de sortie correspondant à la carte de ligne correspondante, de manière à notifier à la carte de ligne correspondante d'arrêter son trafic correspondant à envoyer à la carte de commutation ;
dans lequel le module de contre-pression (240) met à jour un compteur de congestion de cellules en monodiffusion et un compteur de congestion de cellules en multidiffusion pour chaque port d'entrée ; et
le message de notification de cellule entrant dans/sortant de la file d'attente comprend : un message d'indication d'incrémentation de 1 du compteur de congestion de cellules en monodiffusion du port d'entrée correspondant lorsqu'il est trouvé qu'il y a une cellule en monodiffusion entrant dans la file d'attente ; un message d'indication de décrémentation de 1 du compteur de congestion de cellules en monodiffusion du port d'entrée correspondant lorsqu'il est trouvé qu'il y a une cellule en monodiffusion sortant de la file d'attente ; un message d'indication d'incrémentation de 1 du compteur de congestion de cellules en multidiffusion du port d'entrée correspondant lorsqu'il est trouvé qu'il y a une cellule en multidiffusion entrant dans la file d'attente ; et un message d'indication de décrémentation de 1 du compteur de congestion en multidiffusion du port d'entrée correspondant lorsqu'il est trouvé qu'il y a une cellule en multidiffusion sortant de la file d'attente.

2. Procédé selon la revendication 1, dans lequel le procédé comprend en outre : avant l'exécution de l'étape 1, recevoir, par un module de réception de cellules (250), une cellule en monodiffusion et une cellule en multidiffusion, les mettre en file d'attente et les stocker dans un module de cache de sortie (210) ; et
l'étape 3 comprend en outre : déterminer, par le module de contre-pression (240), si le cache de sortie dans le module de cache de sortie (210) est en dépassement de capacité, et si tel est le cas, ajouter le signal d'indication de régulation de trafic de niveau de liaison active à un en-tête de chaque cellule à transmettre via chacun de la pluralité de ports de sortie à la pluralité de cartes de ligne, de manière à notifier à la pluralité de cartes de ligne d'arrêter leur trafic correspondant à envoyer à la carte de commutation.

3. Procédé selon la revendication 2, comprenant en outre :
ajouter, par le module de contre-pression (240), un signal d'indication de régulation de trafic de niveau de liaison inactive à l'en-tête de chaque cellule à transmettre via le port de sortie correspondant à la carte de ligne correspondante, s'il est déterminé que le nombre des cellules dans la file d'attente de congestion qui sont reçues via le port d'entrée n'atteint pas le seuil prédéterminé ; et
ajouter, par le module de contre-pression (240), le signal d'indication de contrôle de trafic de niveau de liaison inactive à l'en-tête de chaque cellule à transmettre via chacun de la pluralité de ports de sortie à la pluralité de cartes de ligne, s'il est déterminé que le cache de sortie n'est pas en dépassement de capacité.

4. Procédé selon la revendication 1, dans lequel l'étape 3 comprend :
incrémenter ou décrémenter de 1, par le module de contre-pression (240), le compteur de congestion de cellules du port d'entrée en fonction du message de notification de cellule entrant dans/sortant de la file d'attente ;
déterminer, par le module de contre-pression (240), si le compteur de congestion de cellules du port d'entrée dépasse un seuil prédéterminé, apprendre, par le module de contre-pression (240), que le nombre des cellules dans la file d'attente de congestion qui sont reçues via le port d'entrée dépasse son seuil lorsqu'il est déterminé que le compteur de congestion de cellules du port d'entrée dépasse son seuil prédéterminé ; et
ajouter, par le module de contre-pression (240), le signal d'indication de régulation de trafic de niveau de liaison active à l'en-tête de chaque cellule à transmettre via le port de sortie correspondant de la carte de ligne correspondante.

5. Dispositif pour réguler un trafic de réseau de commutation dans une carte de commutation incluant une pluralité de ports d'entrée et une pluralité de ports de sortie, la carte de commutation recevant des cellules en monodiffusion et en multidiffusion provenant d'une pluralité de cartes de ligne via la pluralité de ports d'entrée, organiser les cellules en monodiffusion et en multidiffusion reçues et envoyer les cellules en monodiffusion et en multidiffusion organisées à la pluralité de cartes de ligne via la pluralité de ports de sortie, **caractérisé en ce que** le dispositif comprend un module de surveillance de congestion (230) et un module de contre-pression (230), dans lequel
le module de surveillance de congestion (230) est conçu pour surveiller à la fois une longueur d'une file d'attente de sortie virtuelle en monodiffusion et une longueur d'une file d'attente de sortie virtuelle en multidiffusion des cellules en monodiffusion et en multidiffusion reçues de la pluralité de cartes de ligne via la pluralité de ports d'entrée, en temps réel, et lorsque la longueur de l'une des files d'attente dépasse un seuil de congestion, enregistrer la file d'attente comme une file d'attente de congestion, générer un signal d'indication de congestion et l'envoyer au module de contre-pression (240) ;
le module de contre-pression (240) est conçu pour ajouter un identifiant de congestion à un en-tête de chaque cellule à transmettre via un port de sortie correspondant à une carte de ligne correspondante, de manière à notifier à la carte de ligne correspondante de réguler son trafic à envoyer à la carte de commutation ;
le module de surveillance de congestion (230) est en outre conçu pour transmettre un message de notification de cellule entrant dans/sortant de la file d'attente au module de contre-pression (240) lorsqu'il est trouvé à partir de la surveillance en temps réel qu'il y a une cellule reçue via l'un de la pluralité de ports d'entrée entrant dans/sortant de la file d'attente de congestion ; et
le module de contre-pression (240) est en outre conçu pour déterminer si un nombre de cellules dans la file d'attente de congestion qui sont reçues via le port d'entrée atteint un seuil prédéterminé en fonction du message de notification de cellule entrant dans/sortant de la file d'attente, et si tel est le cas, ajouter un signal d'indication de régulation de trafic de niveau de liaison active à l'en-tête de chaque cellule à transmettre via le port de sortie correspondant à la carte de ligne correspondante, de manière à notifier à la carte de ligne correspondante d'arrêter son trafic correspondant à envoyer à la carte de commutation ;
dans lequel le module de contre-pression (240) est en outre conçu pour mettre à jour un compteur de gestion de cellules en monodiffusion et un compteur de congestion de cellules en multidiffusion pour chaque port d'entrée ; et
le message de notification de cellule entrant dans/sortant de la file d'attente comprend : un message d'indication d'incrémentation de 1 du compteur de congestion de cellules en monodiffusion du port d'entrée correspondant lorsqu'il est trouvé qu'il y a une cellule en monodiffusion entrant dans la file d'attente ; un message d'indication de décrémentation de 1 du compteur de congestion de cellules en monodiffusion du port d'entrée correspondant lorsqu'il est trouvé qu'il y a une cellule en monodiffusion sortant de la file d'attente ; un message d'indication d'incrémentation de 1 du compteur de congestion de cellules en multidiffusion du port d'entrée correspondant lorsqu'il est trouvé qu'il y a une cellule en multidiffusion entrant dans la file d'attente ; et un message d'indication de décrémentation de 1 du compteur de congestion de cellules en multidiffusion du port d'entrée correspondant lorsqu'il est trouvé qu'il y a une cellule en multidiffusion sortant de la file d'attente.

6. Dispositif selon la revendication 5, comprenant en outre un module de réception de cellules (250), conçu pour recevoir une cellule en monodiffusion et une cellule en multidiffusion, les mettre en file d'attente et les stocker dans un module de cache de sorte (210) ; dans lequel
le module de contre-pression (240) est en outre conçu pour déterminer si le cache de sortie dans le module de cache de sortie (240) est en dépassement de capacité, et si tel est le cas, ajouter le signal d'indication de régulation de trafic de niveau de liaison active à un en-tête de chaque cellule à transmettre à partir de chacun de la pluralité de ports de sortie à la pluralité de cartes de ligne, de manière à notifier à la pluralité de cartes de ligne d'arrêter leur trafic correspondant à envoyer à la carte de commutation.

7. Dispositif selon la revendication 6, dans lequel le module de contre-pression (240) est en outre conçu pour ajouter un signal d'indication de régulation de trafic de niveau de liaison active à l'en-tête de chaque cellule à transmettre via le port de sortie correspondant à la carte de ligne correspondante, s'il est déterminé que le nombre des cellules dans la file d'attente de congestion qui sont reçues via le port d'entrée n'atteint pas le seuil prédéterminé ; et
ajouter le signal d'indication de régulation de trafic de niveau de liaison inactive à l'en-tête de chaque cellule à transmettre via chacun de la pluralité de ports de sortie à la pluralité de cartes de ligne, s'il est déterminé que le cache de sortie n'est pas en dépassement de capacité.

8. Dispositif selon la revendication 5, dans lequel le module de contre-pression (240) comprend en outre : un sous-module de réception pour le message d'indication de congestion (241), un sous-module de réception pour le message de notification de cellule entrant dans/sortant de la file d'attente (242) et un sous-module de surveillance de compteur (243) ;
le sous-module de réception pour le message d'indication de congestion (241) est conçu pour recevoir le signal d'indication de congestion transmis par le module de surveillance de congestion (230), et ajouter l'identifiant de congestion à l'en-tête de chaque cellule à transmettre via le port de sortie correspondant à la carte de ligne correspondante ;
le sous-module de réception pour le message de notification de cellule entrant dans/sortant de la file d'attente (242) est conçu pour recevoir le message de notification de cellule entrant dans/sortant de la file d'attente transmis par le module de surveillance de congestion (230), et incrémenter ou décrémenter de 1 le compteur de congestion de cellules du port d'entrée en fonction du message de notification de cellule entrant dans/sortant de la file d'attente ; et
le sous-module de surveillance de compteur (243) est conçu pour déterminer si le compteur de congestion de cellules du port d'entrée dépasse un seuil prédéterminé, apprendre que le nombre des cellules dans la file d'attente de congestion qui sont reçues via le port d'entrée dépasse son seuil lorsqu'il est déterminé que le compteur de congestion de cellules du port d'entrée dépasse son seuil prédéterminé, et ajouter le signal d'indication de régulation de trafic de niveau de liaison active à l'en-tête de chaque cellule à transmettre via le port de sortie correspondant à la carte de ligne correspondante.
